Europäisches Patentamt

European Patent Office

Office européen des brevets

(19)

(11) **EP 1 359 572 A2**

(12) **EUROPEAN PATENT APPLICATION**

(43) Date of publication:
**05.11.2003 Bulletin 2003/45**

(51) Int Cl.7: **G11B 7/0045**, G11B 7/125

(21) Application number: **03252684.0**

(22) Date of filing: **28.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **02.05.2002 JP 2002130490**

(71) Applicant: **Pioneer Corporation
Tokyo-to (JP)**

(72) Inventors:
• **Sasaki, Yoshio, c/o Pioneer Corporation
Tokorozawa-shi, Saitama-ken (JP)**

• **Adachi, Masatoshi, c/o Pioneer Corporation
Tokorozawa-shi, Saitama-ken (JP)**
• **Tanaka, Hisao, c/o Pioneer Corporation
Tokorozawa-shi, Saitama-ken (JP)**
• **Nakagawa, Hidenori, c/o Pioneer Corporation
Tokorozawa-shi, Saitama-ken (JP)**
• **Uchino, Hiroyuki, c/o Pioneer Corporation
Tokorozawa-shi, Saitama-ken (JP)**

(74) Representative: **Haley, Stephen
Gill Jennings & Every,
Broadgate House,
7 Eldon Street
London EC2M 7LH (GB)**

(54) **Information recording and reproducing apparatus and information recording method**

(57)    The information recording and reproducing apparatus (1) drives the light source (11) based on the recording data to irradiate the laser pulses on the storage medium (D) and forms the recording marks. The level of the laser pulse is varied between the write power level (Pw) necessary to form the recording marks and the bias level (Pb) during the mark periods. Since the bias level (Pb) is set to be lower than the read power level (Pr) necessary to reproduce recording marks, the quantity of the laser light irradiated onto the storage medium (D) during the recording may be reduced, and the adverse effect due to the heat accumulation or the heat distribution can be diminished. As a result, the recording marks of appropriate shape can be formed on the storage medium (D), and the information recording accuracy can be improved.

## FIG. 1A

EP 1 359 572 A2

# FIG. 1B

**Description**

This invention relates to a technique for recording information on an optical disc using a laser beam or other means.

Onto a recordable or rewritable optical disc such as a DVD-R (DVD-Recordable) or a DVD-RW (DVD-Rerecordable), information is recorded thereon by irradiating a laser beam on its recording surface. At the areas on the recording surface of the optical disc where the laser beam is irradiated, the property of the optical recording medium forming the optical disc is physically changed because of the increased temperature. This produces recording marks on the recording surface.

Namely, the laser beam is modulated by recording pulses having time widths corresponding to information to be recorded, so that the laser pulses having lengths corresponding to information to be recorded are generated and irradiated on the optical disc. Thus, recording marks having lengths corresponding to the information to be recorded can be formed on the optical disc.

One approach recently used is to form a recording mark by a pulse train having a plurality of short pulses, rather than by a single laser pulse. This approach, called "write strategy", introduces less heat accumulation on the recording surface of the optical disc compared to the approach irradiating a single recording laser pulse. Therefore, uniform temperature distribution can be achieved on the recording surface on which the recording marks are formed. This can prevent undesired teardrop-shaped recording marks from being formed, and enables the formation of the recording marks of preferred shape.

In the case of DVD-R, for example, the recording pulse train consists of a plurality of pulses which magnitudes varying between a certain read power level and write power level. That is, based on recording data, the areas on the recording surface of the optical disc where no recording marks are to be formed (referred to as "space periods" hereafter) are irradiated with the laser beam of the read power. The areas on the recording surface of the optical disc where recording marks are to be formed (referred to as "mark periods" hereafter) are irradiated with the laser beam of the power corresponding to the recording pulse train having magnitudes varying between the read power and the write power. Consequently, the recording marks are formed on the recording surface. In the case of DVD-RW, the recording pulse train has a waveform which magnitudes varying between three power levels, i.e., the read power level, the erase power level for erasing recording mark already formed, and the write power level.

In the case that the magnitudes of the recording pulses vary between the read power level and the write power level, or between the read power level, the erase power level and the write power level, the laser beam is irradiated on the disc surface with the large power for recording when the recording pulse is at the write power level, and the temperature of the disc surface increases. However, when the recording pulse is at the read power level, the laser beam is irradiated on the disc surface with reading power, and the temperature of the disc surface decreases for some degrees. Thus, the recording pulse train according to the write strategy is designed to irradiate the laser beams with the write power and the read power alternately to repeat heating and cooling, thereby preventing the temperature of the disc surface from becoming so high due to the heat accumulation or else.

However, even if the power of the laser beam is switched between the read power level and the write power level (or further between the erase power level in the case of DVD-RW) as described above, the laser beam is still being irradiated on the disc during the period of the read power level. The temperature increase of the disc surface can be suppressed to some extent, compared with the continuous irradiation of the laser beam of write power level because the read power level is much lower than the write power level. However, the heat accumulation and the heat distribution on the disc surface are very important problems in order to maintain the desired recording accuracy, and it is further desired to effectively suppress the heat accumulation and the heat distribution at the time of recording information by using the recording pulse train.

It is an object of the present invention to provide an information recording and reproducing apparatus and an information recording method capable of suppressing the influence of the heat accumulation and the heat distribution to improve the recording accuracy in case of recording information by using the write strategy of so-called multi-pulse type which includes a plurality of pulses and uses a bias level.

According to one aspect of the present invention, there is provided an information recording and reproducing apparatus which irradiates a laser light onto a storage medium to form recording marks corresponding to recording data, including: a light source which emits the laser light; and a control unit which drives the light source based on the recording data to irradiate laser pulses onto the storage medium, wherein, at a time of recording, the control unit controls a level of the laser pulse to vary between a write power level necessary to form the recording mark and a bias level during a mark period of the recording data, and wherein the bias level is lower than a read power level necessary to reproduce the recording data from the storage medium.

The above information recording and reproducing apparatus irradiates the laser light onto a storage medium such as an optical disc, e.g., DVD-R or DVD-RW, and forms recording marks on the storage medium, thereby recording information. In addition, by using the reflected light from the optical disc, the recorded information is reproduced. Specifically, the information recording and reproducing apparatus drives the light source based on the recording data to irradiate the laser pulses on the storage medium and forms the recording marks. The level of the laser pulse is varied between the write power level necessary to form the recording marks and the bias level during the mark periods. Since the bias level is set to be lower than the read power level necessary to reproduce recording marks, the quantity of the laser light irradiated onto the storage medium during the recording may be reduced, and the adverse effect due to the heat accumulation or the heat distribution can be diminished. As a result, the recording marks of appropriate shape can be formed on the storage medium, and the information recording accuracy can be improved.

In the above information recording and reproducing apparatus, the bias level may be a level at which the light source does not emit the laser light. Thus, the laser light is irradiated on the storage medium only in the period in which the level of the laser pulse is at the write power level necessary to form the recording mark. Therefore, unnecessary laser light is not irradiated on the storage medium, and the heat accumulation may further be diminished.

According to an embodiment of the information recording and reproducing apparatus, the recording data may include, within the mark period, multi-pulse periods in which the level of the laser pulse varies between the write power level and the bias level. In this case, in the case of DVD-R, for example, the level of the laser can be lowered to the bias level independently for each laser pulse, and hence the heat accumulation by irradiating the laser light can be suppressed.

The control unit may set the level of the laser to the read power level at a time of reproduction and set the level of the laser to a level lower than the read power level during a space period of the recording data at the time of recording. By this, the irradiation quantity of the laser light can be reduced not only in the mark periods, but also in the space periods, and hence the heat accumulation can be reduced further.

In another embodiment of the information recording and reproducing apparatus, the recording data may include, within the mark period, a period in which the level of the laser pulse is at an erase power level necessary to erase a recorded mark and a multi-pulse period in which the level of the laser pulse varies between the write power level and the bias level. In this embodiment, in the case of DVD-RW, for example, the level of the laser can be lowered to the bias level independently for each laser pulse, and hence the heat accumulation by irradiating the laser light can be suppressed.

The recording data may include a cooling period of a certain time length within a space period and immediately after the preceding mark period, and the level of the laser pulse during the cooling period may be equal to the bias level. By this, the irradiation quantity of the laser light can be reduced even after the mark period, and the ending edge of the recording mark may be made clear.

In another embodiment of the information recording and reproducing apparatus, the recording data may include, within the mark period, a plurality of smaller periods having different levels including the write power level and the bias power level, and the control unit may control the level of the laser pulse independently for the respective smaller periods. In this case, regardless of the write strategy used for the recording, the mark period is divided into plural periods and the level of the laser is adjusted for each period. Therefore, the irradiation quantity of the laser light can be precisely controlled.

In a preferred embodiment, the light source may be a laser diode, the bias level may be an output level of the laser light emitted by the light source when a bias current is supplied to the light source, and the bias current may be larger than a threshold current of the laser diode. In such a case, the current to be supplied to the laser diode and the respective levels of the laser pulse can be defined within the linear area of the output characteristic of the laser diode, and the level of the laser pulse may be stabilized.

According to another aspect of the present invention, there is provided an information recording method which irradiates a laser light onto a storage medium to form recording marks corresponding to recording data, including the step of driving the light source based on the recording data to irradiate a laser pulse on the storage medium, wherein the driving step controls, at a time of recording, a level of the laser pulse to vary between a write power level necessary to form the recording mark and a bias level during a mark period of the recording data, and wherein the bias level is lower than a read power level necessary to reproduce the recording data.

The above information recording and reproducing method irradiates the laser light onto a storage medium such as an optical disc, e.g., DVD-R or DVD-RW, and forms recording marks on the storage medium, thereby recording information. Specifically, the light source is driven based on the recording data to irradiate the laser pulses on the storage medium and forms the recording marks. The level of the laser pulse is varied between the write power level necessary to form the recording marks and the bias level during the mark periods. Since the bias level is set to be lower than the read power level necessary to reproduce recording marks, the quantity of the laser light irradiated onto the storage medium during the recording may be reduced, and the adverse effect due to the heat accumulation or the heat distribution can be diminished. As a result, the recording marks of appropriate shape can be formed on the storage medium, and the information recording accuracy can be improved.

The nature, utility, and further features of this invention will be more clearly apparent from the following detailed description with respect to preferred embodiment of the invention when read in conjunction with the accompanying drawings briefly described below.

In the Drawings;

FIGS. 1A and 1B are waveform diagrams each showing a recording waveform at the time of a recording control according to an embodiment of the present invention;

FIGS. 2A and 2B are waveform diagrams each showing a recording waveform of a comparative example;

FIG. 3 is a block diagram showing a schematic configuration of an information recording/reproducing apparatus according to the present invention;

FIG. 4 is a block diagram showing the recording control unit shown in FIG. 3;

FIG. 5 is a graph showing a laser output characteristic of a laser diode; and

FIGS. 6A and 6B are waveform diagrams each showing a recording pulse waveform according to modifications of the present invention.

The preferred embodiments of the present invention will now be described below with reference to the attached drawings.

[Recording Pulse Waveform]

The present invention is characterized in that the bias level is set to be lower than the read power level within the portion in which the recording mark is formed by the laser beam irradiation (hereinafter referred to as "mark period") in the recording pulse waveform according to the write strategy using the bias level, such as so-called multi-pulse type write strategy. Thus, the heat accumulation due to the multi-pulse, for example, is effectively suppressed to enable the formation of recording mark having appropriate shape.

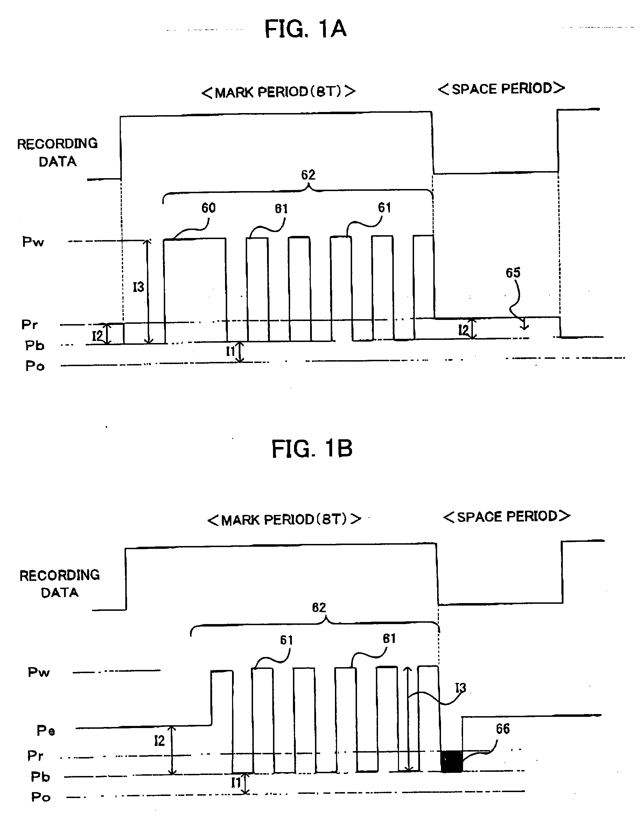

FIGS. 1A and 1B show the recording pulse waveforms according to the present invention. FIG. 1A shows the recording pulse waveform for a DVD-R as the recording medium, and FIG. 1B is the recording pulse waveform for a DVD-RW for the recording medium.

As shown in FIG. 1A, the recording data has the mark periods and the space periods (in which no recording mark is formed). FIG. 1A shows the 8T mark period. The recording pulse waveform used in the present invention includes, within the mark period, one top pulse and individual pulses of the number corresponding to the length of the mark period. For example, the mark period of the recording pulse waveform corresponding to 3T mark only includes one top pulse. The mark period corresponding to 4T mark includes one top pulse and one individual pulse, and the mark period corresponding to 5T mark includes one top pulse and two individual pulses. The 8T mark period shown in FIG. 1A includes one top pulse 60 and five individual pulses 61.

It is noted that the portion including the top pulse 60 and the plural individual pulses 61 will be hereinafter referred to as "multi-pulse portion 62".

The power level of the recording pulse waveform takes one of the laser-off level Po (the laser output power = 0) when the laser output is switched off, the bias level Pb, the read power level Pr and the write power level Pw. In the present invention, the level of the multi-pulse portion 62 is varied between the bias level Pb and the write power level Pw during the mark period of the recording pulse waveform, and the bias level Pb is set to be lower than the read power level Pr. Namely, as shown in FIG. 1A, during the mark period, the respective pulses 60 and 61 constituting the multi-pulse portion 62 vary between the bias level Pb lower than the read power level Pr and the write power level Pw.

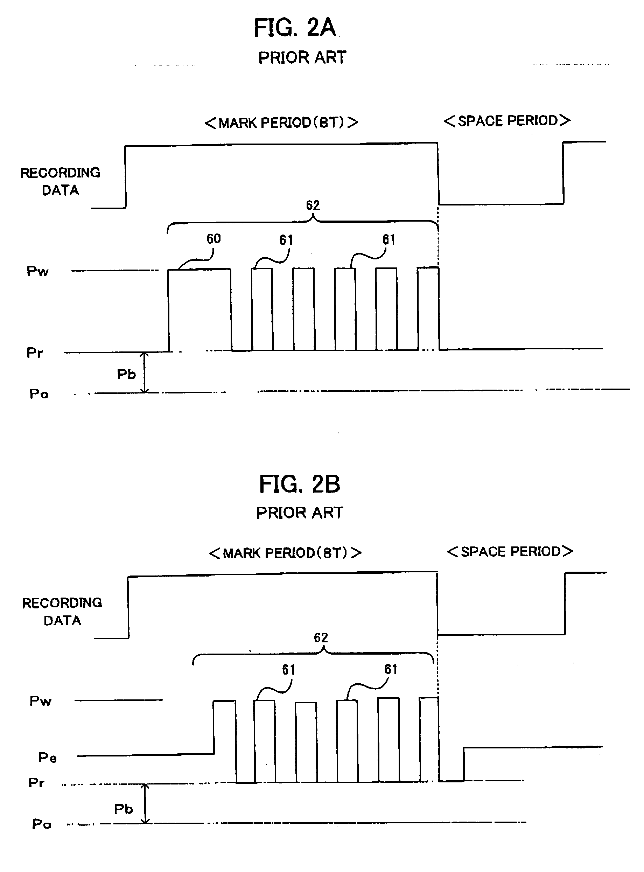

For the sake of comparison, FIG. 2A shows a general example of multi-pulse type recording waveform. The levels of the respective pulses 60 and 61 in the mark period vary between the read power level Pr and the write power level Pw.

As described above, in the present invention, the level of the recording pulse waveform in the mark period becomes the bias level, which is lower than the read power level Pr, in the portion other than the portion of the write power level Pw, and hence the problem such as the heat accumulation may be reduced.

FIG. 1B shows the example in which the present invention is applied to the recording pulse waveform for DVD-RW. In the case of DVD-RW, the level of the recording pulse waveform is maintained at the erase power level Pe by an APC (Automatic Power Control) in the portion other than the multi-pulse portion 62 within the mark period and the space period expect the portion 66. On the other hand, in the multi-pulse portion 62 in the mark period, similarly to the above-mentioned DVD-R, the level of the recording pulse waveform varies between the bias level Pb and the write power level Pw.

For the sake of comparison, a general example of a recording pulse waveform of DVD-RW is shown in FIG. 2B. In the example shown in FIG. 2B, the level of the recording pulse waveform varies between the read power level Pr and the write power level Pw in the multi-pulse portion 62 in the mark period. Thus, also in the case of DVD-RW, the adverse effect of the heat accumulation and the heat distribution to the formation of the recording mark may be diminished by varying the level of the recording pulse waveform in the multi-pulse portion 62 between the write power level Pw and the bias power level Pb which is lower than the read power level Pr.

It is noted that, while the bias level Pb is set to a certain intermediate level between the laser-off level Po (i.e., the laser output power = 0) and the read power level Pr, this is merely an example of determination of the bias level Pb. In the present invention, the level of the recording pulse waveform is varied between the bias level Pb and the write power level Pw in the multi-pulse portion 62 of the mark period, and hence the adverse effect of the heat accumulation can be diminished if the following condition is satisfied:

Bias level Pb < Read power level Pr .

Also, in theory, the bias level Pb may be equal to the laser-off level Po, and the level of the recording pulse waveform in the multi-pulse portion 62 in the mark period may be varied between the laser-off level Po and the write power level Pw. The method of determining the bias level Pb will be described later.

In the example of the recording pulse waveform of DVD-R shown in FIG. 1A, the recording pulse waveform is maintained at the read power level Pr in the space period. However, as shown by the arrow 65, the level of the recording pulse waveform in the space period may be lowered near the bias level Pb. By this, the quantity of heat given to the optical disc after the mark_period is reduced, and it is expected that the shape of the recording mark, particularly the shape of its end portion, becomes appropriate. It is also expected that, if the space period is short, the shape of the following recording mark, particularly the shape of its leading portion, becomes appropriate.

In the case of DVD-RW shown in FIG. 1B, a cooling pulse may be provided immediately after the mark period (i.e., at the head of the space period). In that case, the level of the cooling pulse may also be set to be equal to the bias level Pb, not to the be equal to the read power level Pr (see. the portion 66).

[Configuration of Information recording- reproducing apparatus]

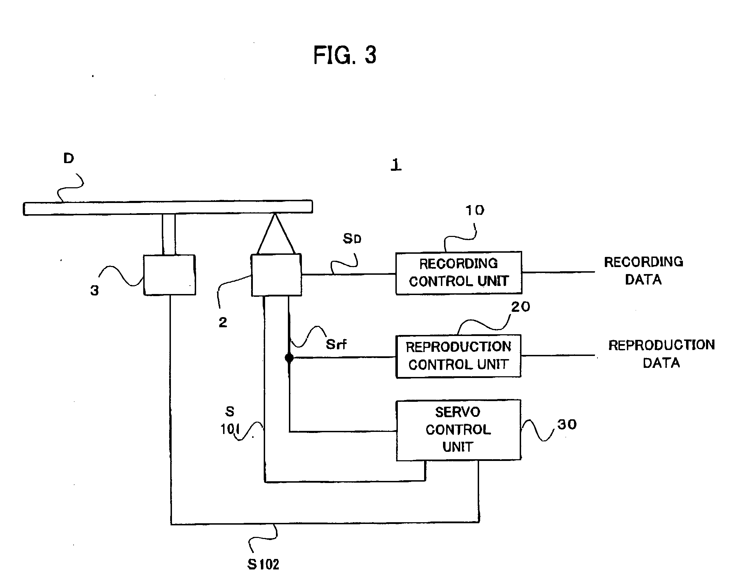

Next, a configuration of an information recording and reproducing apparatus to which the invention is applied will be described. FIG. 3 schematically shows an entire configuration of the information recording and reproducing apparatus according to the embodiment of the invention. The information recording and reproducing apparatus 1 records information on an optical disc D and reproduces information from the optical disc D. For example, the optical disc D may be a CD-R (Compact Disc-Recordable) and a DVD-R for recording only once, and a CD-RW (Compact Disc-Rewritable) and a DVD-RW that allow for repeated erasing and recording of information.

The information recording and reproducing apparatus 1 includes an optical pickup 2 for irradiating a recording beam and a reproduction beam to the optical disc D, a spindle motor 3 for controlling rotation of the optical disc D, a recording control unit 10 for controlling recording of information on the optical disc D, a reproduction control unit 20 for controlling reproduction of information recorded on the optical disc D, and a servo control unit 30 for various kinds of servo controls. The servo controls include a spindle servo for controlling rotation of the spindle motor 3, and a focus servo and tracking servo for controlling a relative position of the optical pickup 2 to the optical disc D.

The recording control unit 10 receives recording data. Then, according to processing to be described later, the recording control unit 10 generates a driving signal $S_D$ for driving a laser diode in the optical pickup 2 and supplies driving signal $S_D$ to the optical pickup 2.

The reproduction control unit 20 receives a read-out signal Srf output from the optical pickup 2 and performs predetermined processing on read-out signal Srf, such as demodulation and decoding, to generate and output reproduction data.

The servo control unit 30 receives the read-out signal Srf from the optical pickup 2. Based on the signal Srf, the servo control unit 30 supplies a servo signal S101 such as a tracking error signal and a focus signal to the optical pickup 2 and supplies a spindle servo signal S102 to the spindle motor 3. Thus, various kinds of servo processing are performed, such as the tracking servo, the focus servo, and the spindle servo.

Since the invention mainly relates to the recording operations in the recording control unit 10 and various known methods can be applied to the reproduction control and the servo control, these controls will not be described in detail.

In addition, although FIG. 1 illustrates the information recording and reproducing apparatus as an embodiment of the invention, the invention may also be applied to an information recording apparatus dedicated to recording.

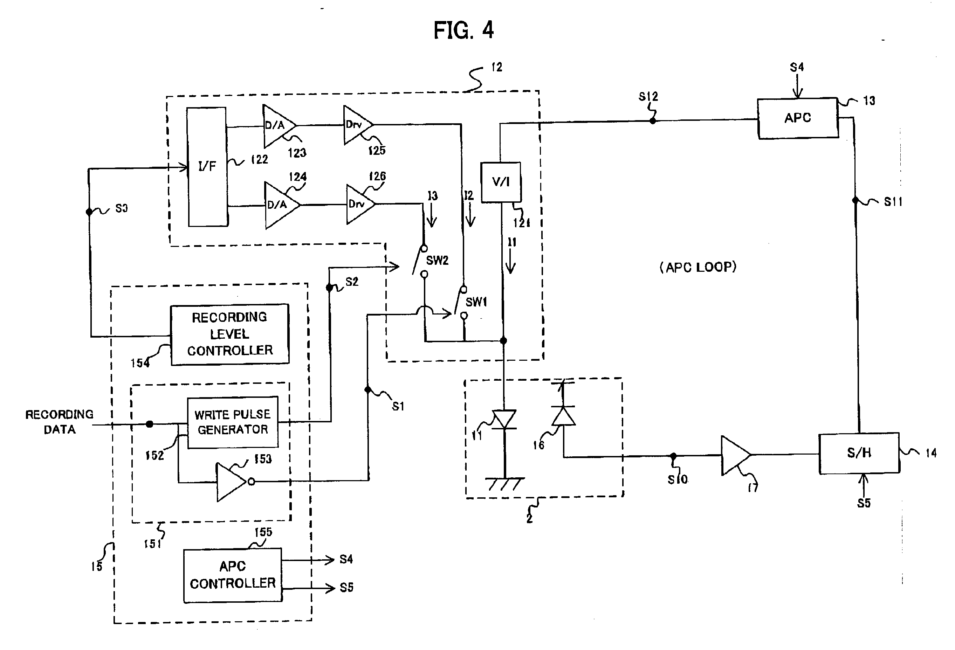

FIG. 4 shows an internal configuration of the optical pickup 2 and the recording control unit 10. As shown in FIG. 4, the optical pickup 2 includes a laser diode (LD) 11 that generates the recording beam for recording information on the optical disc D and the reproduction beam for reproducing information from the optical disc D. The optical pickup 2 also includes a front monitor diode (FMD) 16 that receives the laser beam emitted by the laser diode 11 and outputs a laser power level signal S10 corresponding to the laser beam.

The optical pickup 2 further includes known components, which will not be shown or described in detail. These components include a photo-detector for receiving a reflection beam of the reproduction beam reflected from the optical disc D and generating the read-out signal Srf, and an optical system for guiding the recording and reproduction beams and the reflection beam to appropriate directions.

The recording control unit 10 includes a laser diode (LD) driver 12, an APC (Automatic Power Control) circuit 13, a sample-and-hold (S/H) circuit 14, a controller 15, and a buffer 17.

The LD driver 12 supplies the laser diode (LD) 11 with a current corresponding to the recording data and causes information to be recorded on the optical disc D. As shown in FIG. 4, the LD driver 12 includes a voltage-to-current (V/I) converter 121, an interface (I/F) 122, D/A converters 123 and 124, drivers 125 and 126, and switches SW1 and SW2.

The sample-and-hold circuit 14 samples and holds the level of the laser power level signal S10 at the timing prescribed by a sample-and-hold signal S5.

The APC circuit 13 controls the power of the laser diode 11 based on a signal S11 output from the sample-and-hold circuit 14. Specifically, in the case of DVD-R, the APC circuit 13 works the LD driver 12 so that the read power level of the laser beam emitted by the laser diode 11 is maintained constant. In the case of DVD-RW, the sample-and-hold circuit 14 controls the LD driver 12 so that the erase power level of the laser beam is maintained constant.

The controller 15 mainly performs recording operation and APC control. As shown in FIG. 4, the controller 15 includes a switching controller 151, a recording level controller 154, and an APC controller 155.

The switching controller 151 includes a write pulse generator 152 and an inverter circuit 153, and generates switching signals S1 and S2 for the switches SW1 and SW2 in the LD driver 12 based on the recording data input to the controller 15.

The recording level controller 154 generates a recording level signal S3 for determining a power level such as the read power level, the write power level, or the erase power level in cooperation with the APC circuit 13. The recording level controller 154 then supplies the recording level signal S3 to the I/F 122 in the LD driver 12.

The APC controller 155 generates an APC target value S4 which is a target value for servo control performed by the APC loop and supplies it to the APC circuit 13. The APC controller 155 also supplies the sample-and-hold circuit 14 with a sample-and-hold signal S5 that indicates the sampling and holding timings of the sample-and-hold circuit 14.

Although the above configuration uses the sample-and-hold circuit 14 to form the APC loop, a bottom hold circuit may be used instead of the sample-and-hold circuit 14. In that case, the APC servo may be performed by using a bottom value of the laser power level signal S10 output from the front monitor diode 16.

[Recording/reproduction operations]

Next, recording control performed by the recording control unit 10 shown in FIG. 4 using the optical pickup 2 will be described. The recording control unit 10 performs the recording/reproduction control and the APC control.

(I) Recording/reproduction control

First, the recording/reproduction control will be described. It is noted that the description is first directed to the case of DVD-R. In the recording operation, the recording level controller 154 in the controller 15 supplies the LD driver 12 with the recording level data S3 for generating currents I2 and I3. The currents I2 and I3 are used to create the read power level Pr and the write power level Pw.

Out of the recording level signal S3, data for the current I2 is supplied to the D/A converter 123 through the I/F 122 in the LD driver 12. The D/A converter 123 generates a corresponding analog signal, and drives the driver 125 by the analog signal to generate the current I2 and supply the current I2 to the switch SW1. Out of the recording level signal S3, data for the current I3 is supplied to the D/A converter 124 through the I/F 122 in the LD driver 12. The D/A converter 124 generates a corresponding analog signal, and drives the driver 126 with the analog signal to generate the current I3 and supply the current I3 to the switch SW2.

The switching controller 151 in the controller 15 generates switching signals S1 and S2 based on the recording data. Specifically, the write pulse generator 152 generates a write pulse signal that consists of a plurality of pulse trains based on the recording data shown in FIG. 1A, and supplies the write pulse signal as the switching signal S2 to the LD driver 12. The inverter 153 generates inverted data of the recording data, and supplies it to the LD driver 12 as the switching signal S1.

In the LD driver 12, the current I1 is being supplied from the V/I converter 121 to the laser diode 11. As shown in FIG. 1A, the current I1 defines the bias level of the recording pulse signal.

Referring to FIG. 1A, during the mark period, the switch SW1 is controlled by the switching signal S1 obtained by inverting the recording data. Therefore, the switch SW1 is turned off, and the current I2 is not supplied to the laser diode 11. Also, in the mark period, the switch SW2 is controlled by the switching signal S2 which is identical to the write pulse signal. Therefore, the switch S2 is turned on and the current I3 is supplied to the laser diode 11 intermittently. As a result, as shown in FIG. 1A, during the mark period, the recording pulse waveform is obtained, which level intermittently varies between the bias level (corresponding to the current I1) and the write power level (corresponding to the current I1+I3).

On the other hand, during the space period, the write pulse generator 152 generates no write pulse. Therefore, the switch SW2 is kept turned off and the current I3 is not supplied to the laser diode 11. The switching signal S1 obtained by inverting the recording data switches the switch SW1 so that the switch SW 1 is kept turned on during the space period, thereby allowing the current I2 to be supplied to the laser diode 11. Thus, as shown in FIG. 1A, the write pulse signal is maintained at the read power level Pr (corresponding to the current I1 + I2) during the space period.

At the time of reproduction, the current I1+I2 is always supplied to the laser diode 11, similarly to the space period, and the recording pulse signal is maintained at the read power level Pr. This allows the recording data to be reproduced.

When the read power level Pr in the space period at the time of recording is set to be lower than the read power level Pr at the time of reproduction, it is necessary that the read power level Pr at the time of recording is different from the read power level Pr at the time of reproduction. Namely, during the space period at the time of recording, the read power level Pr may be lowered within such a range that the APC servo described later and the forcus/tracking servo control is ensured. However, at the time of reproduction, it is necessary that the read power level Pr is maintained at a normal level so that the reproduction of the recorded data is enabled and the reproduction quality is ensured. Therefore, the APC target value supplied to the APC circuit 13 is different at the time of reproduction and in the space period at the time of recording.

Next, the description will be given to the case of DVD-RW. Also in the case of DVD-RW, the basic operation is the same as the case of the DVD-R. Namely, the recording pulse waveform is maintained at the read power level Pr at the time of reproduction. In the space period at the time of recording, the current I1+I2 is supplied to the laser diode 11, but the value of the current I2 is increased to set the recording pulse waveform at the erase power level Pe. In the mark period at the time of recording, the current I3 is selectively added to the bias current I1 to generate the recording pulse waveform shown in FIG. 1B.

(II) APC control

Next, the APC control will be described. The APC control is performed at the time of reproduction and during the space period expect the portion 66 at the time of recording, but is not performed during the mark period at the time of recording. The APC control is performed by the APC loop formed by the laser diode 11, the front monitor diode 16, the buffer 17, the sample-and-hold circuit 14, the APC circuit 13, and the V/I converter 121.

First, the description will be given to the case of DVD-R. In the case of DVD-R, the APC control adjusts the level of the bias current I1 supplied from the LD driver 12 to the laser diode such that the level of the laser beam emitted by the laser diode 11 is always maintained at the read power level Pr. Namely, out of the space period of the recording data (which is 8-16 modulated and includes the mark period and the space period of the length of 3T to 11T and 14T), in the long space period (e.g., space period of 5T to 11T and 14T) the bias current I1 from the LD driver 12 is adjusted such that the read power level Pr is constant.

Details of the operations are as follows. The controller 15 generates the recording pulse waveform corresponding to the recording data as described above, and drives the LD driver 12 according to the recording pulse waveform to causes the laser diode 11 to emit the laser beam.

The front monitor diode 16 is located in proximity to the laser diode 11 in the optical pickup 2. The front monitor diode 16 receives a part of the laser beam emitted by the laser diode 11 to generate the laser power level signal S10 indicating the level of the laser beam, and supplies the signal S10 to the sample-and-hold circuit 14 through the buffer 17.

The sample-and-hold circuit 14 samples the laser power level signal S10 supplied by the front monitor diode 16 and holds its level for a certain period at the timings given by the sample-and-hold signal S5 supplied by the APC controller 155 in the controller 15. The sample-and-hold signal S5 output from the controller 15 is a pulse signal indicating the period in which the signal for the APC control is to be generated. More specifically, the sample-and-hold signal S5 is a pulse signal indicating a certain period (a period during which the APC is performed, also referred to as an "APC period" hereafter) in a relatively long space period (e.g., 5T to 11T) in the recording data. Thus, the sample-and-hold circuit 14 samples the level of the laser power level signal S10 in the APC period in the space period of the recording data, and holds and supplies the sampled level to the APC circuit 13 during the period other than the APC periods.

The APC circuit 13 is supplied with the APC target value S4 by the APC controller 155 in the controller 15. The APC target value S4 indicates the level of the laser beam at which the laser beam is to be maintained by the APC. In the present case, the APC target value S4 corresponds to the read power level Pr. The APC circuit 13 supplies the control signal S12 to the V/I converter 121 in the LD driver 12 to maintain the level of the laser power level signal S10 in the APC periods at a certain level indicated by the APC target value S4. The V/I converter 121 converts the voltage indicated by the input control signal S12 to a current and outputs the bias current I1.

During the space period at the time of recording as well as at the time of reproduction, the current I2 is supplied to the laser diode 11 via the switch SW1. Therefore, the laser diode 11 is driven by the current (I1+I2) corresponding to the read power level Pr during the space period, and outputs the laser beam at the read power level Pr. If the output level of the laser beam emitted by the laser diode 11 varies due to the temperature variation or other factor, the APC loop functions to vary the bias current I1 so as to absorb the variation of the laser output level. As a result, during the space period, the recording pulse waveform is constantly maintained at the read power level Pr.

As mentioned above, in the case of DVD-R shown in FIG. 3A, the read power level Pr during the space period can be lowered by reducing the current I2. In that case, the APC target value S4 supplied from the controller 15 to the APC circuit 13 is reduced.

Next, the description will be given to the case of DVD-RW. In the case of DVD-RW, at the time of reproduction, the output level of the laser beam is maintained at the read power level Pr. Therefore, the APC target value supplied to the APC circuit 13 is set to the value corresponding to the read power level Pr, and the APC loop operates such that the level that the laser diode outputs based on the current I1+I2 is equal to the read power level Pr. On the other hand, during the space period at the time of recording, the output level of the laser beam is maintained at the erase power level Pe. In this case, the value of the current I2 may be set to be larger than that in the case of DVD-R, as mentioned above. The APC target value corresponding to the erase power level Pe is supplied to the APC circuit 13, and the APC loop operates such that the laser output level is maintained at the erase power level Pe.

[Determination of Bias Current I1]

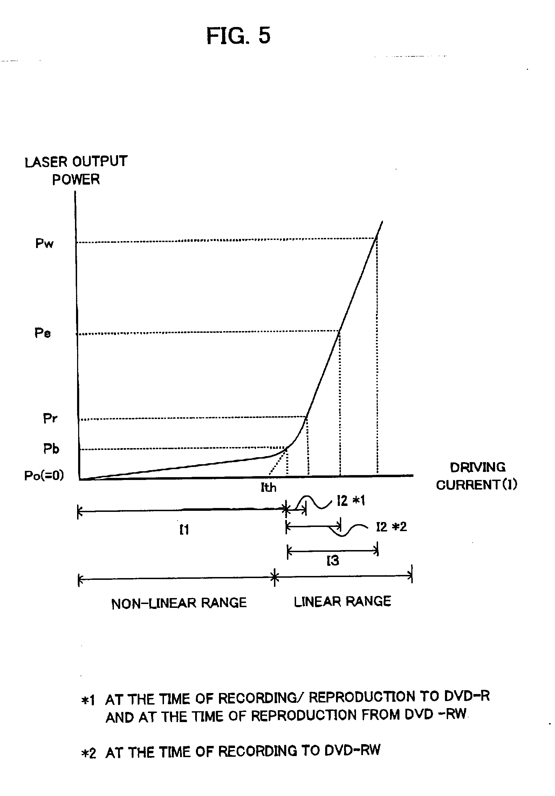

Next, the method of determining the bias current I1 will be studied. FIG. 5 shows the characteristic of the laser diode. In FIG. 5, the horizontal axis represents the drive current I of the laser diode, and the vertical axis represents the laser output power P. The laser diode hardly emit light when the drive current is smaller than the threshold current Ith, and its output power is almost zero. When the drive current I exceeds the threshold current Ith, the output power P increases generally in proportion to the increase of the drive current. The above-mentioned write power level Pw, the erase power level Pe and the read power level Pr are all set within the range in which the output characteristic shown in FIG. 5 is linear, i.e., the range in which the drive current I is sufficiently larger than the threshold current Ith.
As described above, in the present invention, by varying the level of the multi-pulse portion between the bias level Pb and the write power level Pw during the mark period at the time of recording, and by setting the bias level Pb to be lower than the read power level Pr, the adverse effect of the heat accumulation and the heat distribution is suppressed. Therefore, it is necessary that the bias level Pb is set to be lower than the read power level Pr. In view of diminishing the effect of the heat accumulation as much as possible, it is desired that the bias level Pb is set to be as lower as possible. However, if the bias current is lower than the threshold current Ith, the operating point enters the non-linear range of the output characteristic of the laser diode, thereby possibly making the bias level Pb with respect to the bias current I1 unstable. As understood from FIGS. 1A, 1B and 5, the write power level Pw, the erase power level Pe and the read power level Pr are all based on the bias level Pb and are all obtained by adding the currents I2 and I3 to the bias current I1. Therefore, if the bias level Pb becomes unstable, it is likely that those levels also become unstable. In this view, it is desirable that the bias current I1 is set within the range in which the output characteristic of the laser diode is linear, i.e., the range near the threshold current Ith or larger than the threshold current Ith. It is more desirable that the bias current I1 is as near to the threshold current Ith as possible.
After the bias current is thus determined, the currents I2 and I3 may be determined such that the respective outputs of the write power level Pw, the erase power level Pe and the read power level Pr are obtained as shown in FIG. 5.
It is noted that, when the read power level Pr is lowered during the space period at the time of recording in the case of DVD-R (the read power level at the time of reproduction is not lowered), it is necessary that the APC servo control can work at the read power level at the time of recording thus lowered.

[Modification]

Next, one modification of the present invention will be described. In the above-described embodiment, out of the recording pulse waveform at the time of recording, during the mark period, the multi-pulse is varied between the bias level Pb and the write power level Pw, and the bias level Pb is set to be lower than the read power level Pr. However, it is not always necessary that the bias level Pb is lower than the read power level Pr throughout the mark period. Namely, the mark period may be divided into smaller periods and the recording pulse waveform may be adjusted such that the bias level of each smaller period is different from each other.

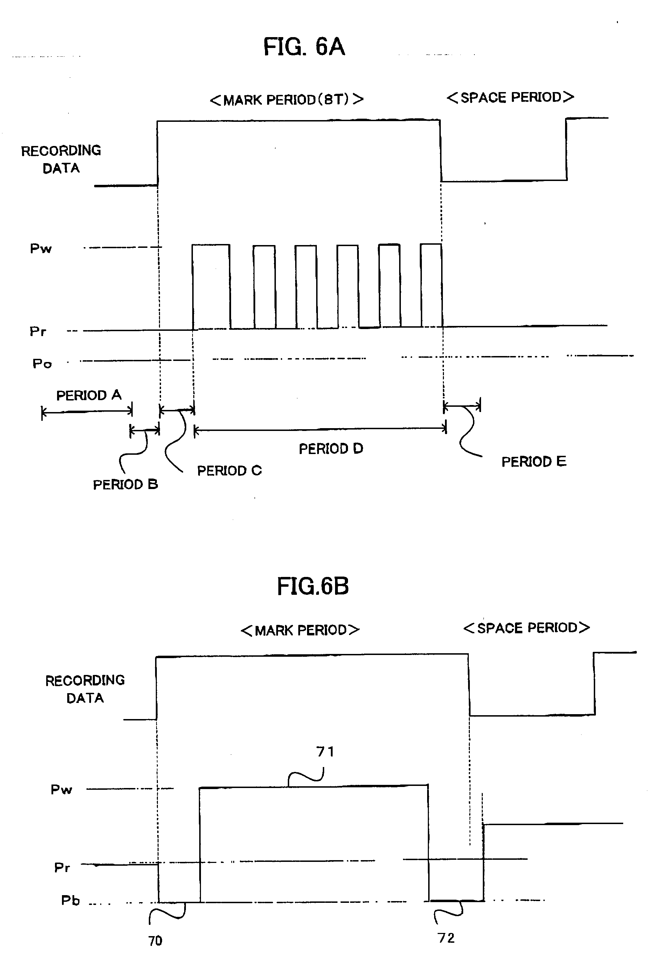

FIG. 6A shows an example in which the recording pulse waveform near one mark period is divided into a plurality of smaller periods. In FIG. 6A, the period A represents the period prior to the recording operation, the period B is a part of the preceding space period, and the period C is a period within the mark period and immediately before the multi-pulse portion. The period D is within the multi-pulse portion, and the period E is immediately after the multi-pulse portion. The periods C and E are not limited to the length of the mark to be formed, and may partly or wholly cover the preceding space period or following space period.
Thus, the recording pulse waveform may be divided into a plurality of smaller periods, and the bias level may be lowered independently for each smaller period, or for certain combination of the smaller periods. Further, the bias level may be set to different levels for each smaller period, independently of each other. Still further, the period D may be further be divided into a plurality of periods, for which the bias level may be controlled independently of each other. For example, the period D may be divided into the further smaller periods corresponding to the respective pulses, and the bias level is lowered only for the periods following the top pulse of the multi pulse portion and is not lowered for other periods.
Next, another modification of the present invention will be described. In the above-described embodiment, the present invention is applied to the multi-pulse type recording pulse waveform and the bias level is adjusted. However, the present invention is applicable to the recording pulse waveform according to the write strategy other than the multi-pulse type. FIG. 6B shows an example in which the present invention is applied to the recording pulse waveform having a single pulse within the mark period. In this example, the bias level periods 70 and 72 exist before and after the single pulse 71 in the mark period, and the bias level of those periods 70 and 72 may be set to be lower than the read power level Pr. Further, the bias level in the period 70 may be different from the bias level in the period 72.

Next, still another modification of the present invention will be described. In the above-described embodiment, the bias level is adjusted for the plurality of mark periods in the same manner. On the contrary, for the recording pulse waveform including mark periods and space periods of various lengths, the bias level may be adjusted with taking the mark length or space length into account. For example, the bias level in the mark period following the short space period such as 3T to 5T may be much lowered in comparison with the bias level in the mark period following the long space period such as equal to or longer than 6T. Also, the bias level may be adjusted only for the mark period before and after the short space period.

As described above, according to the present invention, since the pulse in the mark period is varied between the bias level, lower than the read power level, and the write power level, the adverse effect of the heat accumulation and the heat distribution may be diminished at the time of recording. By this, recording marks of appropriate shape can be formed, and the recording accuracy can be improved.

**Claims**

1. An information recording and reproducing apparatus (1) which irradiates a laser light onto a storage medium (D) to form recording marks corresponding to recording data, comprising:

   a light source (11) which emits the laser light; and
   a control unit (10) which drives the light source based on the recording data to irradiate laser pulses onto the storage medium,

   wherein, at a time of recording, the control unit controls a level of the laser pulse to vary between a write power level (Pw) necessary to form the recording mark and a bias level (Pb) during a mark period of the recording data, and wherein the bias level (Pb) is lower than a read power level (Pr) necessary to reproduce the recording data from the storage medium (D).

2. The information recording and reproducing apparatus (1) according to claim 1, wherein the bias level (Pb) is a level at which the light source (11) does not emit the laser light.

3. The information recording and reproducing apparatus (1) according to claim 1, wherein the recording data includes, within the mark period, multi-pulse periods (62) in which the level of the laser pulse varies between the write power level (Pw) and the bias level (Pb).

4. The information recording and reproducing apparatus (1) according to claim 1, wherein the control unit (10) sets the level of the laser pulse to the read power level (Pr) at a time of reproduction and sets the level of the laser pulse to a level lower than the read power level (Pr) during a space period of the recording data at the time of recording.

5. The information recording and reproducing apparatus (1) according to claim 4, wherein the level lower than the read power level (Pr) is equal to the bias level (Pb).

6. The information recording and reproducing apparatus (1) according to claim 1, wherein the recording data includes, within the mark period, a period in which the level of the laser pulse is at an erase power level (Pe) necessary to erase a recorded mark and a multi-pulse period (62) in which the level of the laser pulse varies between the write power level (Pw) and the bias level (Pb).

7. The information recording and reproducing apparatus (1) according to claim 1, wherein the recording data includes a cooling period (66) of a certain time length within a space period and immediately after the preceding mark period, and wherein the level of the laser pulse during the cooling period (66) is equal to the bias level (Pb).

8. The information recording and reproducing apparatus (1) according to claim 1, wherein the recording data include, within the mark period, a plurality of smaller periods (A to E) having different levels including the write power level (Pw) and the bias power level (Pb), an wherein the control unit (10) controls the level of the laser pulse independently for the respective smaller periods (A to E).

9. The information recording and reproducing apparatus (1) according to claim 1, wherein the light source (11) comprises a laser diode, wherein the bias level (Pb) is an output level of the laser light emitted by the light source (11) when a bias current is supplied to the light source (11), and wherein the bias current is larger than a threshold current (Ith) of the laser diode.

**10.** An information recording method which irradiates a laser light onto a storage medium (D) to form recording marks corresponding to recording data, comprising the step of driving the light source (11) based on the recording data to irradiate a laser pulse on the storage medium (D),

wherein the driving step controls, at a time of recording, a level of the laser pulse to vary between a write power level (Pw) necessary to form the recording mark and a bias level (Pb) during a mark period of the recording data, and wherein the bias level (Pb) is lower than a read power level (Pr) necessary to reproduce the recording data.

## FIG. 1A

<MARK PERIOD (8T)>          <SPACE PERIOD>

RECORDING
DATA

## FIG. 1B

<MARK PERIOD (8T)>          <SPACE PERIOD>

RECORDING
DATA

# FIG. 2A
## PRIOR ART

<MARK PERIOD (8T)>  <SPACE PERIOD>

RECORDING DATA

62

60  61  61

Pw

Pr

Pb

Po

# FIG. 2B
## PRIOR ART

<MARK PERIOD(8T)>  <SPACE PERIOD>

RECORDING DATA

62

61  61

Pw

Pe

Pr

Pb

Po

13

# FIG. 3

# FIG. 4

EP 1 359 572 A2

# FIG. 5

*1  AT THE TIME OF RECORDING/ REPRODUCTION TO DVD-R
    AND AT THE TIME OF REPRODUCTION FROM DVD -RW.

*2  AT THE TIME OF RECORDING TO DVD-RW

## FIG. 6A

## FIG.6B